# EUROPÄISCHE PATENTSCHRIFT

(11) **EP 1 848 905 B1**
(45) Veröffentlichungstag und Bekanntmachung des Hinweises auf die Patenterteilung: **06.01.2010**
(21) Anmeldenummer: 06705935.2
(22) Anmeldetag: 08.02.2006
(51) Int. Cl.: F16J 15/32, F01D 11/00, F01D 11/02

(54) **DICHTUNGSANORDNUNG**
SEAL ARRANGEMENT
SYSTEME DE GARNITURE D'ETANCHEITE

(30) Priorität: 16.02.2005 DE 102005006939
(43) Veröffentlichungstag der Anmeldung: 31.10.2007
(73) Patentinhaber: MTU Aero Engines GmbH, 80995 München (DE)
(72) Erfinder: BEICHL, Stefan, 82211 Herrsching (DE); GAIL, Alfons, 86316 Friedberg (DE)
(86) Internationale Anmeldenummer: PCT/DE2006/000210
(87) Internationale Veröffentlichungsnummer: WO 2006/086946

(56) Entgegenhaltungen:
- DE-A1- 10 163 804
- DE-A1- 10 326 540
- US-A- 5 265 412
- US-A1- 2002 189 096
- US-A1- 2003 131 602

## Beschreibung

Die Erfindung betrifft eine Dichtungsanordnung nach dem Oberbegriff des Anspruchs 1. Des Weiteren betrifft die Erfindung eine Turbomaschine, eine Gasturbine sowie eine Dampfturbine.

Gasturbinen bestehen aus mehreren Baugruppen, so z. B. aus mindestens einem Verdichter, einer Brennkammer sowie mindestens einer Turbine. Der oder jeder Verdichter sowie die oder jede Turbine verfügen über einen Rotor, der gegenüber einem feststehenden Stator rotiert. Bei dem Stator handelt es sich insbesondere um ein feststehendes Gehäuse, dem feststehende Leitschaufeln zugeordnet sind. Dem Rotor sind Laufschaufeln zugeordnet, die sich zusammen mit dem Rotor gegenüber den feststehenden Leitschaufeln sowie dem feststehenden Gehäuse drehen.

Zur Optimierung des Wirkungsgrads von Gasturbinen ist es erforderlich, Leckageströmungen zu minimieren. Dies gilt einerseits für Leckageströmungen zwischen relativ zueinander rotierenden Bauteilen und anderseits für Leckageströmungen zwischen feststehenden Bauteilen. Dichtungsanordnungen zur Abdichtung eines Spalts zwischen relativ zueinander rotierenden Bauteilen bezeichnet man auch als dynamische Dichtungsanordnungen. Dichtungsanordnungen zur Abdichtung eines Spalts zwischen feststehenden Bauteilen bezeichnet man auch als statische Dichtungsanordnungen.

Zur Abdichtung von Spalten zwischen relativ zueinander rotierenden Bauteilen sowie zwischen feststehenden Bauteilen haben sich Bürstendichtungen bewährt. Bürstendichtungen verfügen über mehrere drahtartige Borsten, die an einem Borstenträger fixiert sind. In eines der den abzudichtenden Spalt definierenden Bauteile ist eine Nut integriert, in welche der Borstenträger positioniert ist und aus welcher freie Enden der Borsten herausragen, wobei diese freien Enden der Borsten auf einem anderen den Spalt definierenden Bauteil aufstehen. Zur Fixierung der Bürstendichtung in einer Nut verfügt dieselbe über einen sogenannten Hinterschnitt, welcher die Nut abschnittsweise einengt und den Borstenträger der Bürstendichtung in der Nut formschlüssig fixiert. Die Herstellung von hinterschnittenen Nuten ist technisch aufwendig sowie teuer und demnach insgesamt von Nachteil.

Das Dokument DE 103 26 540 A1 betrifft ein Verfahren zum Herstellen von Bürstendichtungs-Einheiten, bei dem eine gerade Bürstendichtung in ein gerades Gehäuseelement eingebracht wird, und die so entstehende Einheit durch Runden zu einer Einheit mit gewünschtem Durchmesser verformt wird. Dabei kann das Gehäuse eine hinterschneidungslose Nut zur Aufnahme/Montage der Bürstendichtung aufweisen, wobei ein wandabschnitt der Nut zur formschlüssigen Fixierung der Bürstendichtung nachträglich gebogen bzw. verstemmt werden kann. Siehe Figur 4 dieses Dokuments. Anstelle von kompletten Ringen können auch Ringsegemente so hergesellt werden.

Das Dokument US 2002/189096 A1 betrifft Bürstendichtungen, deren Borstenelemente in hinterschneidungslosen Nuten fixiert sein können. Hierzu wird ein Verankerungsstreifen (anchoring strip) aus einem verformbaren Metall seitlich neben dem Borstenelement in die Nut gepresst, so dass eine reibschlüssige (kraftschlüssige) Fixierung erzielt wird.

Das Dokument US 2003/131602 A1 betrifft Bürstendichtungen mit axial orientierten Borsten, welche gegen radiale, rotierende Dichtflächen federbelastet sind. Die Dichtungen weisen auch eine gewisse radiale Beweglichkeit auf.

Das Dokument US-A-5 265 412 schützt selbsteinstellende, statische Bürstendichtungen, welche in einer hinterschneidungslosen Nut durch ein vorgespanntes Federelement (spring clip) abgedichtet und fixiert werden.

Hiervon ausgehend liegt der vorliegenden Erfindung das Problem zu Grunde, eine neuartige Dichtungsanordnung mit günstiger Herstellung und Montage zu schaffen.

Das Problem der Erfindung wird durch eine Dichtungsanordnung gemäß Anspruch 1 gelöst. Nach Anspruch 1 wird eine Dichtungsanordnung für eine Turbomaschine zur Abdichtung eines umlaufenden Spalts zwischen einem Rotor und einem Stator vorgeschlagen, wobei der Stator einen Dichtungsträger mit mindestens einer umlaufenden Nut zur Aufnahme jeweils einer segmentierten, dynamischen Dichtung aufweist, wobei Segmente der dynamischen Dichtung als Bürstendichtungssegmente ausgebildet sind, und-wobei freie Enden von sich in radialer Richtung erstreckenden Borsten der Bürstendichtungssegmente aus der jeweiligen Nut herausragen und an dem Rotor anliegen. Dabei ist die oder jede Nut zur Montage der Bürstendichtungssegmente als hinterschneidungslose Nut gefertigt.

Erfindungsgemäß sind die Bürstendichtungssegmente in der jeweiligen hinterschneidungslosen Nut durch in Bohrungen geführte, stiftartige oder schraubenartige Klemmelemente fixiert, wobei im Bereich jedes Bürstendichtungssegments jeweils mindestens ein Klemmelement positioniert ist, und wobei das jeweilige Klemmelement die jeweilige Nut einschnürt und das Bürstendichtungssegment in der jeweiligen Nut formschlüssig fixiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnungen 6, 7 und 8 näher erläutert. Dabei zeigt:
- Fig. 1: einen Querschnitt durch eine nicht erfindungsgemäße Dichtungsanord- nung nach einem ersten Ausführungsbeispiel;
- Fig. 2: einen Querschnitt durch eine nicht erfindungsgemäße Dichtungsanord- nung nach einem zweiten Ausführungsbeispiel;
- Fig. 3: einen Querschnitt durch eine nicht erfindungsgemäße Dichtungsanord- nung nach einem dritten Ausführungsbeispiel;
- Fig. 4: einen Querschnitt durch eine nicht erfindungsgemäße Dichtungsanord- nung nach einem vierten Ausführungsbeispiel;
- Fig. 5: einen Querschnitt durch eine nicht erfindungsgemäße Dichtungsanord- nung nach einem fünften Ausführungsbeispiel;
- Fig. 6: einen Querschnitt durch eine erfindungsgemäße Dichtungsanord- nung nach einem ersten Ausführungsbeispiel der Erfindung;
- Fig. 7: einen Querschnitt durch eine erfindungsgemäße Dichtungsanord- nung nach einem zweiten Ausführungsbeispiel der Erfindung;
- Fig. 8: einen Querschnitt durch eine erfindungsgemäße Dichtungsanord- nung nach einem dritten Ausführungsbeispiel der Erfindung; und
- Fig. 9: einen Querschnitt durch eine nicht erfindungsgemäße Dichtungsanord- nung nach einem sechsten Ausführungsbeispiel.

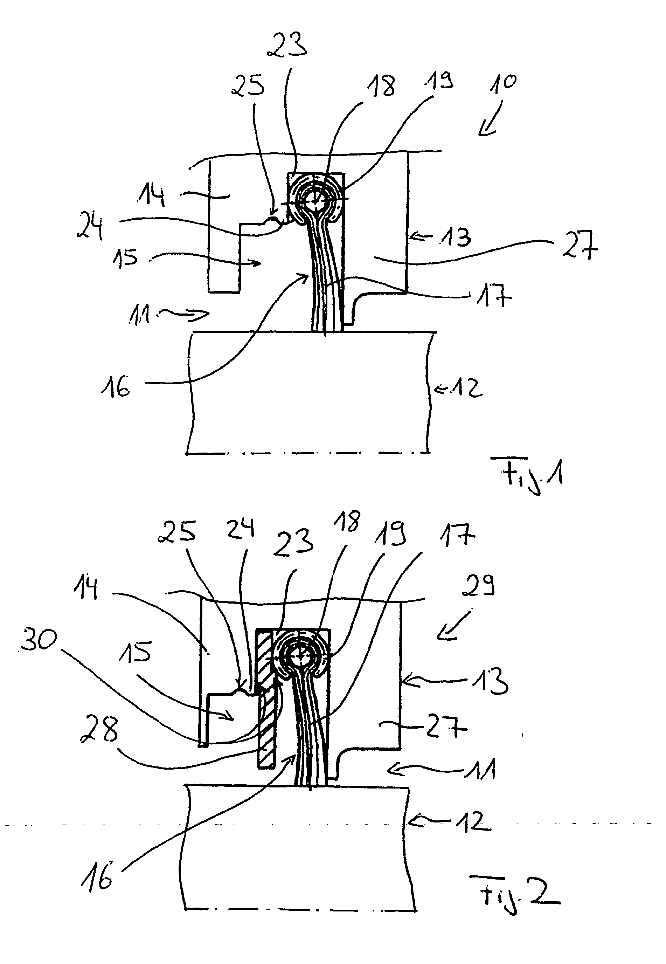

Nachfolgend wird die hier vorliegende Dichtungsanordnung unter Bezugnahme auf Fig. 1 bis 9 in größerem Detail beschrieben.

Fig. 1 zeigt eine Dichtungsanordnung 10 zur Abdichtung eines Spalts 11 zwischen einem Rotor 12 und einem Stator 13. Bei der Dichtungsanordnung 10 handelt es sich demnach um eine dynamische Dichtungsanordnung. Dem Stator 13 ist ein Dichtungsträger 14 zugeordnet, wobei in einer Nut 15 des Dichtungsträgers 14 eine segmentierte Bürstendichtung aus mehreren Bürstendichtungssegmenten 16 angeordnet ist. Die in Fig. 1 dargestellte Nut 15 ist demnach als in Umfangsrichtung um den Rotor 12 umlaufende Nut ausgebildet, in der eine ebenfalls in Umfangsrichtung umlaufende Bürstendichtung angeordnet ist, wobei die Bürstendichtung aus mehreren Bürstendichtungssegmenten 16 zusammengesetzt ist. Jedes der Bürstendichtungssegmente 16 erstreckt sich über einen definierten Winkelabschnitt der in Umfangsrichtung verlaufenden Nut 15.

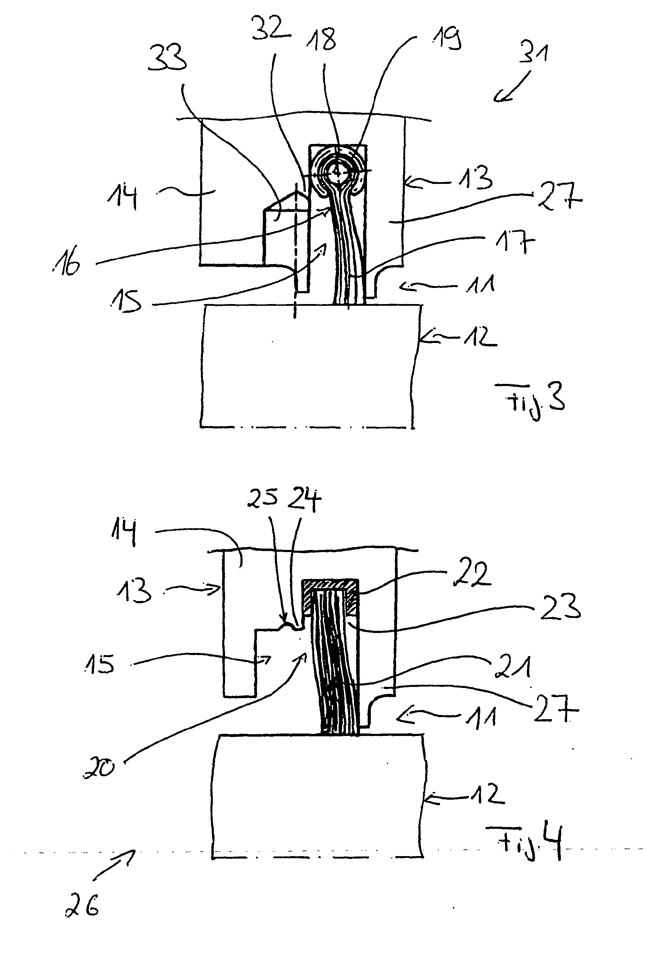

Im gezeigten Ausführungsbeispiel der Fig. 1 ist das Bürstendichtungssegment 16 aus mehreren drahtartigen Borsten 17 gebildet, die um einen drahtförmigen Borstenträger 18 gewickelt und am Borstenträger 18 durch ein C-förmiges Fixierelement 19 fixiert sind. Die Borsten 17 erstrecken sich in radialer Richtung und liegen mit freien Enden auf dem Rotor auf. Die Borsten 17 liegen axial an der radial längeren Seite der Nut 15 an, die als Stützfläche für die Borsten 17 dient. Ein üblicherweise bei Bürstendichtungen erforderlicher, separater Stützring entfällt. Eine derartige Ausgestaltung der Bürstendichtungssegmente 16 ist zwar bevorzugt, es sind, wie Fig. 4 zeigt, jedoch auch andere Ausgestaltungen von Bürstendichtungssegmenten 20 denkbar. Bei dem in Fig. 4 dargestellten Bürstendichtungssegment 20 sind mehrere drahtartige Borsten 21 in einem U-förmigen Borstenträger 22 fixiert, nämlich vorzugsweise in denselben eingeklebt. Weitere Variationen von Bürstendichtungssegmenten sind auch vorstellbar, z.B. mit einem Borstenträger verschweißte Borsten.

Es wird vorgeschlagen, die Nut 15 zur Aufnahme der Bürstendichtungssegmente 16 hinterschneidungslos auszuführen. So verfügt die hinterschneidungslose Nut 15 in einem Aufnahmeabschnitt 23 über die gesamte radiale Höhe über eine identische axiale Breite. In dieser hinterschneidungslosen Nut 15 bzw. dem hinterschneidungslosen Aufnahmeabschnitt 23 derselben ist das Bürstendichtungssegment 16 im Bereich des Borstenträgers 18 formschlüssig fixiert und zwar mithilfe eines Klemmelements.

Im Ausführungsbeispiel der Fig. 1 sind die Bürstendichtungssegmente 16 in der Nut 15 bzw. im Aufnahmeabschnitt 23 durch ein in Umfangsrichtung umlaufendes, lippenförmiges Klemmelement 24 fixiert. Das lippenartige Klemmelement 24 wird durch eine umlaufende Ausnehmung 25 in einer Nutwand der Nut 15 sowie den Aufnahmeabschnitt 23 begrenzt bzw. definiert. Durch Umbiegen des lippenartigen Klemmelements 24 in Richtung auf das in der Nut 15 zu fixierende Bürstendichtungssegment 16 kann die Nut 15 im Aufnahmeabschnitt 23 eingeschnürt werden, um so das Bürstendichtungssegment 16 in der Nut 15 formschlüssig zu fixieren.

Im Ausführungsbeispiel der Fig. 1 werden demnach die Bürstendichtungssegmente 16 in der Nut 15 bzw. im Aufnahmeabschnitt 23 durch Umbiegen des lippenförmigen Klemmelements 24 verstemmt. Das lippenförmige, in Umfangsrichtung umlaufende Klemmelement 24 kann dabei entweder über den gesamten Umfang oder lediglich abschnittsweise umgebogen werden. Gleiches gilt für die Dichtungsanordnung 26 des Ausführungsbeispiels der Fig. 4, die sich von der Dichtungsanordnung 10 des Ausführungsbeispiels der Fig. 1 lediglich durch die konkrete Ausführung der Bürstendichtungssegmente unterscheidet.

Im Ausführungsbeispiel der Fig. 1 und 4 liegen die Borsten 17 bzw. 21 der Bürstendichtungssegmente 16 bzw. 20 an einer ein Stützelement 27 bildenden Nutwand an. Ist neben dem Stützelement 27 auch ein Deckelement 28 für die Bürstendichtungssegmente erwünscht, so bietet sich die Dichtungsanordnung 29 gemäß Fig. 2 an. Die Dichtungsanordnung 29 der Fig. 2 unterscheidet sich von der Dichtungsanordnung 10 der Fig. 1 lediglich dadurch, dass der Aufnahmeabschnitt 23 für die Bürstendichtungssegmente 16 in axialer Richtung verbreitert ist, sodass zusätzlich zu den Bürstendichtungssegmenten 16 ein das Deckelement 28 bildendes plattenförmiges Element zusammen mit den Bürstendichtungssegmenten 16 im Aufnahmeabschnitt 23 aufgenommen werden kann. Durch Umbiegen des lippenförmigen Klemmelements 24 wird das Deckelement 28 zusammen mit den Bürstendichtungssegmenten 16 in der Nut 15 bzw. im Aufnahmeabschnitt 23 derselben verstemmt. Das gemeinsame Verstemmen des Deckelements 28 und des Bürstendichtungssegments 16 wird dadurch unterstützt, dass das Deckelement 28 auf beiden Seiten, also einerseits auf einer dem jeweiligen Bürstendichtungssegment 16 zugewandten Seite und andererseits auf einer dem lippenförmigen Klemmelement 24 zugewandten Seite einen treppenförmigen Absatz 30 aufweist.

Ein weiteres Ausführungsbeispiel einer Dichtungsanordnung 31 zeigt Fig. 3. Auch bei der Dichtungsanordnung 31 der Fig. 3 werden die Bürstendichtungssegmente 16 in der Nut 15 durch lippenförmige Klemmelemente 32 verstemmt. Im Ausführungsbeispiel der Fig. 3 sind die lippenartigen Klemmelemente 32 jedoch nicht in Umfangsrichtung umlaufend, vielmehr erstrecken sich dieselben lediglich abschnittsweise über den Umfang der Nut 15. Über den Umfang der Nut 15 sind im Ausführungsbeispiel der Fig. 3 mit Abstand voneinander mehrere sich in radialer Richtung erstreckende Bohrungen 33 integriert, welche die lippenartigen Klemmelementabschnitte 32 definieren. Wie bereits erwähnt, sind die Bohrungen 33 über den Umfang der Nut 15 voneinander beabstandet. Hierdurch wird demnach die dem Stützelement 27 gegenüberliegende Nutwand über den Umfang abschnittsweise unterbrochen, sodass ein durch diese Nutwand bereitgestelltes Deckelement ebenfalls abschnittsweise unterbrochen ist.

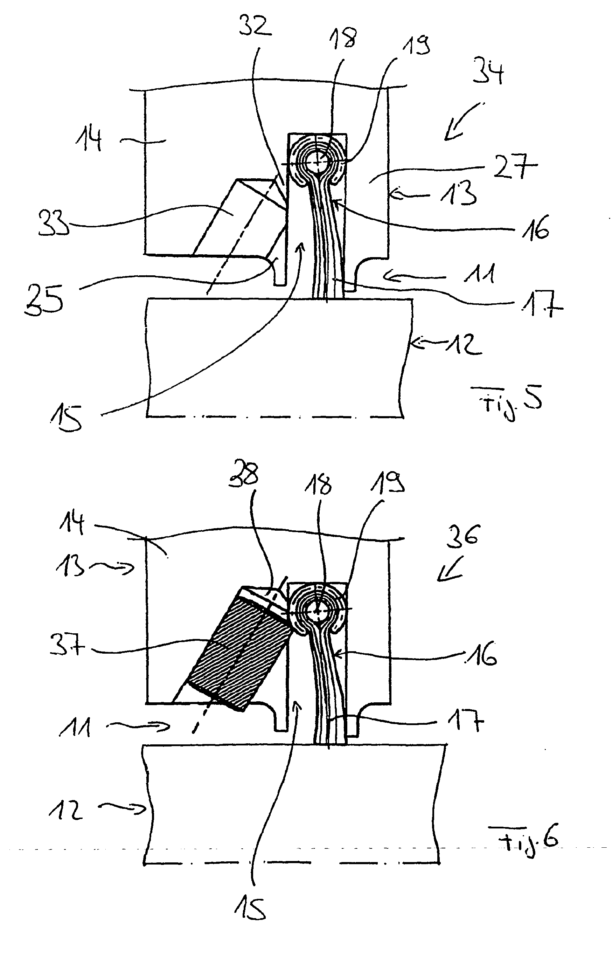

In Fig. 5 ist ein Ausführungsbeispiel einer Dichtungsanordnung 34 gezeigt, bei welcher die Bohrungen 33 zur Ausbildung der lippenartigen Klemmelementabschnitte 32 schräg verlaufen. Hierdurch kann gewährleistet werden, dass über den gesamten Umfang der Nut 15 ein Deckelement 35 vorhanden ist, welches dem Stützelement 27 gegenüberliegt. Hinsichtlich der übrigen Details kann auf die Ausführungen zu den Ausführungsbeispielen gemäß Fig. 1 bis 4 verwiesen werden.

Fig. 6 zeigt ein Ausführungsbeispiel einer erfindungsgemäßen Dichtungsanordnung 36. Im Ausführungsbeispiel der Fig. 6 sind die Bürstendichtungssegmente 16 in der hinterschneidungslosen Nut 15 ebenfalls durch Klemmelemente fixiert, wobei im Ausführungsbeispiel der Fig. 6 Klemmelemente 37 stiftartig bzw. bolzenartig ausgebildet und in Bohrungen 38 des Dichtungsträgers 14 geführt sind. Die in die Bohrungen 38 eingeführten, stiftartigen Klemmelemente 37 schnüren die hinterschnittslose Nut 15 bereichsweise ein und sorgen so für eine formschlüssige Fixierung der Bürstendichtungssegmente 16 in der umlaufenden Nut 15. Die Klemmelemente 37 können dabei als Passstifte oder Madenschrauben ausgebildet sein. Die Klemmelemente 37 können in der Bohrung 38 durch Verkleben oder Verschweißen gesichert werden. Werden Madenschrauben verwendet, dann können die Bürstendichtungssegmente gezielt in die umlaufende Nut gedrückt werden, sodass dieselben ohne Spalt am Nutgrund anliegen. Hierdurch kann der Dichtungsspalt der zwischen den Bürstendichtungssegmenten und dem Rotor besteht, besonders exakt eingestellt werden.

Selbstverständlich können auch bei der Ausgestaltung der Fig. 3, bei welcher die Bohrungen 33 in radialer Richtung verlaufen, als Passstifte oder Madenschrauben ausgebildete Klemmelemente zur Fixierung von Bürstendichtungssegmenten analog zur Ausgestaltung der Fig. 6 verwendet werden.

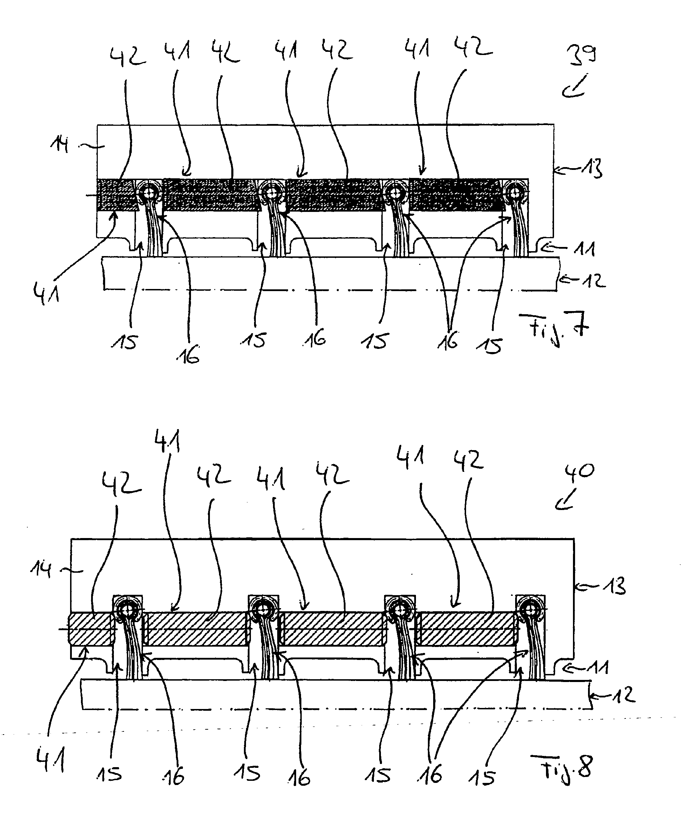

Fig. 7 und 8 zeigen erfindungsgemäße Ausführungsbeispiele von dynamischen Dichtungsanordnungen 39 bzw. 40 zur Abdichtung des umlaufenden Spalts 15 zwischen dem Rotor 12 und dem Stator 13, wobei in den Dichtungsträger 14 mehrere axial voneinander beabstandete Nuten 15 integriert sind. Jede der umlaufenden Nuten 15 dient der Aufnahme mehrerer Bürstendichtungssegmente 16.In Fig. 7 und 8 sind jeweils zwei benachbarte Nuten 15 durch sich in axialer Richtung erstreckende Bohrungen 41 miteinander verbunden, wobei in den Bohrungen 41 Klemmelemente 42 Aufnahme finden. Die Klemmelemente 42 sind als Passstifte oder Madenschrauben ausgeführt und dienen wiederum der Einschnürung der hinterschneidungslosen Nuten 15 zur formschlüssigen Fixierung der Bürstendichtungssegmente 16 in den hinterschneidungslosen Nuten 15.

Zur Montage der Dichtungsanordnungen 39 und 40 der erfindungsgemäßen Ausführungsbeispiele gemäß Fig. 7 und 8 wird so vorgegangen, dass zuerst in der äußerst rechten Nut 15 Bürstendichtungssegmente 16 angeordnet und sodann von links ein erstes Klemmelement 42 durch die Bohrungen 41 bis ganz nach rechts geschoben wird, um so die Bürstendichtungssegmente 16 in der äußerst rechten Nut 15 zu fixieren. Darauffolgend werden sukzessive die sich jeweils anschließenden Nuten 15 mit Bürstendichtungssegmenten 16 bestückt und diese Bürstendichtungssegmente 16 mit Klemmelementen 42 fixiert, bis die äußerst linke Nut 15 mit Bürstendichtungssegmenten 16 bestückt ist, wobei auch im Bereich dieser Nut ein Klemmelement 42 die Bürstendichtungssegmente 16 formschlüssig fixiert. Die Ausführungsbeispiele der Fig. 7 und 8 unterscheiden sich lediglich durch die konkrete Ausführung der Klemmelemente 42, wobei im Ausführungsbeispiel der Fig. 7 die in die jeweiligen Nuten 15 hineinragenden Enden der Klemmelemente 42 abgeschrägt sind.

Alle Dichtungsanordnungen gemäß Fig. 1 bis 8 zeigen dynamische Dichtungsanordnungen zur Abdichtung eines Spalts 11 zwischen einem Rotor 12 und einem Stator 13, wobei in einem Dichtungsträger 14 des Stators 13 mindestens eine hinterschneidungslose Nut 15 zur Aufnahme von Bürstendichtungssegmenten 16 bzw. 20 eingebracht ist. In der oder jeden hinterschneidungslosen Nut 15 werden die Bürstendichtungssegmente 16 durch Klemmelemente fixiert. Die Klemmelemente sind entweder als lippenartige Klemmelemente oder, erfindungsgemäß, als in Bohrungen geführte Stift, Bolzen oder Schrauben ausgeführt.

Wie bereits mehrfach erwähnt, sind die Bürstendichtungen aus Bürstendichtungssegmenten zusammengesetzt, wobei sich jedes Bürstendichtungssegment über einen definierten Winkelabschnitt des Umfangs der Nut erstreckt. Es sei darauf hingewiesen, dass selbstverständlich auch der Dichtungsträger 14 segmentiert sein kann. So kann der Dichtungsträger 14 aus mehreren Dichtungsträgersegmenten zusammengesetzt sein, wobei sich jedes Dichtungsträgersegment über einen definierten Umfangsabschnitt erstreckt und in jedem Dichtungsträgersegment ein oder mehrere Bürstendichtungssegmente positioniert sein können. Die Dichtungsträgersegmente bilden dann zusammen den Dichtungsträger.

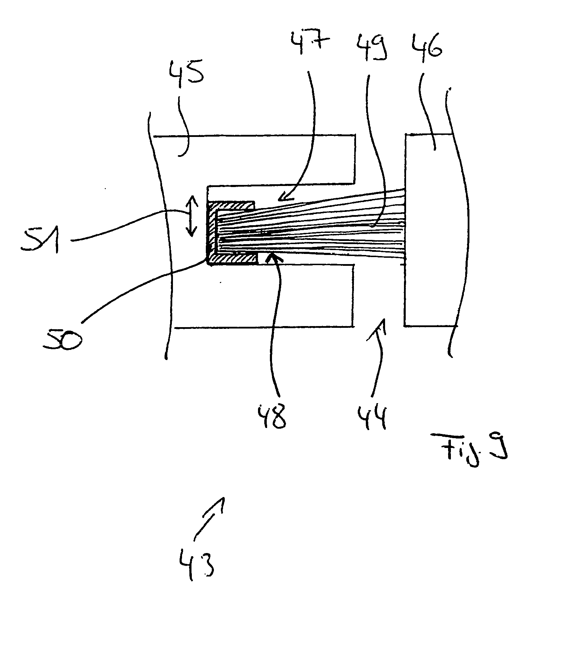

Fig. 9 zeigt eine Dichtungsanordnung 43 zur Abdichtung eines Spalts 44 zwischen zwei statorseitigen Bauteilen 45 und 46, bei der Dichtungsanordnung 43 der Fig. 9 handelt es sich demnach um eine statische Dichtungsanordnung. In ein erstes statorseitiges Bauteil 45 ist eine Nut 47 eingebracht, in welcher eine Bürstendichtung bzw. mehrere Bürstendichtungssegmente 48 Aufnahme finden. Das Bürstendichtungssegment 48 der Fig. 9 verfügt über mehrere drahtartige Borsten 49, die in einen U-förmigen Borstenträger 50 fixiert sind. Freie Enden der Borsten 49 ragen aus der Nut 47 heraus und stehen auf einem zweiten statorseitigen Bauteil 46 auf. Die Borsten 49 und die Nut 47 erstrecken sich gemäß Fig. 9 in axialer Richtung.

Im Ausführungsbeispiel der Fig. 9 handelt es bei der Nut 47 um eine hinterschneidungslose Nut, die demnach über die gesamte axiale Breite über eine identische radiale Höhe verfügt. Innerhalb dieser hinterschneidungslosen, axial verlaufenden Nut 47 sind die Bürstendichtungssegmente 48 mit radialem Spiel angeordnet, die Bürstendichtungssegmente 48 können sich demnach im Sinne des Doppelpfeils 51 innerhalb der Nut 47 verschieben. Die Borsten 49 der Bürstendichtungssegmente 48 erstrecken sich in axialer Richtung und drücken das Bürstendichtungssegment 48 in die Nut 47.

Die erfindungsgemäßen und nicht erfindungsgemäßen Dichtungsanordnungen finden bevorzugt Verwendung in Turbomaschinen, insbesondere in Gasturbinen, wie zum Beispiel Flugtriebwerken. Die dynamischen Dichtungsanordnungen gemäß Fig. 1 bis 8 dienen vorzugsweise der Abdichtung umlaufender Radialspalte zwischen Rotoren und Statoren in Turbinen oder Verdichtern, so zum Beispiel der Abdichtung eines radial innenliegenden Spalts zwischen einem Rotor und radial innenliegenden Enden feststehender Leitschaufeln oder der Abdichtung eines radial außenliegenden Spalts zwischen radial außenliegenden Enden rotierender Laufschaufeln und einem feststehenden Gehäuse. Die Dichtungsanordnungen gemäß Fig. 1 bis 8 dienen dann als sogenannte "Inner Air Seal" oder als sogenannte "Outer Air Seal". Die erfindungsgemäßen und nicht erfindungsgemäßen Dichtungsanordnungen können auch bei Dampfturbinen Verwendung finden.

## Patentansprüche

1. Dichtungsanordnung für eine Turbomaschine, zur Abdichtung eines umlaufenden Spalts (11) zwischen einem Rotor (12) und einem Stator (13), wobei der Stator (13) einen Dichtungsträger (14) mit mindestens einer umlaufenden Nut (15) zur Aufnahme jeweils einer segmentierten, dynamischen Dichtung aufweist, wobei Segmente der dynamischen Dichtung als Bürstendichtungssegmente (16; 20) ausgebildet sind, wobei freie Enden von sich in radialer Richtung erstreckenden Borsten (17; 21) der Bürstendichtungssegmente aus der jeweiligen Nut (15) herausragen und an dem Rotor (12) anliegen, und wobei die oder jede Nut (15) zur Montage der Bürstendichtungssegmente (16; 20) als hinterschneidungslose Nut gefertigt ist,
**dadurch gekennzeichnet,**
**dass** die Bürstendichtungssegmente (16) in der jeweiligen Nut (15) durch in Bohrungen (38; 41) geführte, stiftartige oder schraubenartige Klemmelemente (37; 42) fixiert sind, wobei im Bereich jedes Bürstendichtungssegments jeweils mindestens ein Klemmelement positioniert ist, und wobei das jeweilige Klemmelement (37; 42) die jeweilige Nut (15) einschnürt und das Bürstendichtungssegment in der jeweiligen Nut formschlüssig fixiert.

2. Dichtungsanordnung nach Anspruch 1, **dadurch gekennzeichnet, dass** mehrere axial voneinander beabstandete, umlaufende Nuten (15) zur Aufnahme jeweils mehrerer Bürstendichtungssegmente (16) angeordnet sind, wobei jeweils zwei benachbarte Nuten (15) durch mindestens eine sich in axialer Richtung erstreckende Bohrung (41) miteinander verbunden sind, in der jeweils ein Klemmelement (42) geführt ist.

3. Dichtungsanordnung nach Anspruch 1 oder 2,
**dadurch gekennzeichnet,**
**dass** das oder jedes Klemmelement (37; 42) als Passstift oder Madenschraube ausgebildet ist.

4. Dichtungsanordnung nach einem der Ansprüche 1 bis 3,
**dadurch gekennzeichnet,**
**dass** Borsten (17) der Bürstendichtungssegemente (16; 20) an einer radial längeren Seite bzw. Wand der Nut (15) axial anliegen, wobei diese Seite bzw. Wand der Nut (15) ein Stützelement (27) bildet.

5. Dichtungsanordnung nach einem oder mehreren der Ansprüche 1 bis 4,
**dadurch gekennzeichnet,**
**dass** der Dichtungsträger (14) derart segmentiert ist, dass sich über den Umfang des Rotors (12) mehrere Dichtungsträgersegmente erstrecken, die zusammen einen kreisringförmigen Dichtungsträger ergeben.

6. Turbomaschine mit mindestens einer Dichtungsanordnung nach einem der Ansprüche 1 bis 5.

7. Gasturbine, insbesondere Flugtriebwerk, mit mindestens einer Dichtungsanordnung nach einem der Ansprüche 1 bis 5.

8. Dampfturbine mit mindestens einer Dichtungsanordnung nach einem der Ansprüche 1 bis 5.

## Claims

1. Seal arrangement for a turbine machine, for sealing an all-round gap (11) between a rotor (12) and a stator (13), the stator having a seal carrier (14) with at least one all-round groove (15) for holding a respective segmented dynamic seal, such that segments of the dynamic seal are formed as brush seal segments (16; 20), such that the free ends of radially extending bristles (17; 21) of the brush seal segments protrude out of the respective groove (15) and rest in contact with the rotor (12), and such that the, or each groove (15) for fitting the brush seal segments (16; 20) is made as a groove with no undercut,
**characterised in that**
the brush seal segments (16; 20) are fixed in the respective groove (15) by pin-like or screw-like clamping elements (37; 42) that pass though holes (38; 41), such that in each case at least one clamping element is positioned in the area of each brush seal segment, and such that in each case the clamping element (37; 42) draws together the respective groove so that the brush seal segment is positively retained in its groove.

2. Seal arrangement according to Claim 1,
**characterised in that**
a plurality of all-round grooves (15) are arranged axially spaced apart from one another for holding a plurality of respective brush seal segments (16), such that two adjacent grooves (15) are in each case connected to one another by at least one bore (41) extending in the axial direction, into which one clamping element (42) is fitted.

3. Seal arrangement according to Claims 1 or 2,
**characterised in that**
the, or each clamping element (37; 42) is in the form of a close-fitting pin or a grub-screw.

4. Seal arrangement according to any of Claims 1 to 3,
**characterised in that**
bristles (17) of the brush seal segment (16; 20) rest axially against a radially longer side or wall of the groove (15), such that the said side or wall of the groove (15) forms a supporting element (27).

5. Seal arrangement according to one or more of Claims 1 to 4,
**characterised in that**
the seal carrier (14) is segmented in such manner that several seal carrier segments extend over the circumference of the rotor (12), which together form a circular seal carrier.

6. Turbine machine with at least one seal arrangement according to any of Claims 1 to 5.

7. Gas turbine, in particular for an aircraft engine, with at least one seal arrangement according to any of Claims 1 to 5.

8. Steam turbine with at least one seal arrangement according to any of Claims 1 to 5.

## Revendications

1. Système d'étanchéité pour une turbomachine, destiné à assurer l'étanchéité d'une fente (11) périphérique entre un rotor (12) et un stator (13), ledit stator (13) comportant un support de garniture d'étanchéité (14) avec au moins une rainure (15) périphérique destinée à recevoir respectivement une garniture d'étanchéité dynamique segmentée, les segments de la garniture d'étanchéité dynamique étant réalisés sous forme de segments d'étanchéité à brosse (16 ; 20), les extrémités libres des poils de brosse (17 ; 21), orientés dans la direction radiale, des segments d'étanchéité à brosse s'avançant en saillie hors de la rainure (15) respective et venant en appui contre le rotor (12), et la ou chaque rainure (15) étant réalisée sous forme de rainure sans contre-dépouille en vue du montage des segments d'étanchéité à brosse (16 ; 20), **caractérisé en ce que** les segments d'étanchéité à brosse (16) sont fixés dans la rainure (15) respective par des éléments de serrage (37 ; 42), en forme de goujon ou de vis, logés dans des forures (38 ; 41), sachant que dans la zone de chaque segment d'étanchéité à brosse est positionné respectivement au moins un élément de serrage, et l'élément de serrage (37 ; 42) concerné rétrécit la rainure (15) concernée et immobilise par conjugaison de forme le segment d'étanchéité à brosse dans la rainure concernée.

2. Système d'étanchéité selon la revendication 1, **caractérisé en ce que** plusieurs rainures (15) périphériques, écartées axialement les unes des autres, sont agencées pour recevoir chacune plusieurs segments d'étanchéité à brosse (16), sachant que respectivement deux rainures (15) adjacentes sont reliées entre elles par au moins une forure (41), orientée dans la direction axiale, dans laquelle est logé respectivement un élément de serrage (42).

3. Système d'étanchéité selon la revendication 1 ou 2, **caractérisé en ce que** le ou chaque élément de serrage (37 ; 42) est réalisé sous forme de goujon de serrage ou de vis sans tête.

4. Système d'étanchéité selon l'une quelconque des revendications 1 à 3, **caractérisé en ce que** les poils de brosse (17) des segments d'étanchéité à brosse (16 ; 20) sont en appui axial contre un côté ou une paroi radialement plus long de la rainure (15), ledit côté ou ladite paroi de la rainure (15) formant un élément d'appui (27).

5. Système d'étanchéité selon une ou plusieurs des revendications 1 à 4, **caractérisé en ce que** le support de garniture d'étanchéité (14) est segmenté de telle sorte que plusieurs segments de support de garniture d'étanchéité s'étendent sur le pourtour du rotor (12) et forment ensemble un support de garniture d'étanchéité circulaire.

6. Turbomachine avec au moins un système d'étanchéité selon l'une quelconque des revendications 1 à 5.

7. Turbine à gaz, en particulier réacteur d'avion, avec au moins un système d'étanchéité selon l'une quelconque des revendications 1 à 5.

8. Turbine à vapeur avec au moins un système d'étanchéité selon l'une quelconque des revendications 1 à 5.
